# EUROPÄISCHE PATENTSCHRIFT

(11) **EP 3 661 865 B1**
(45) Veröffentlichungstag und Bekanntmachung des Hinweises auf die Patenterteilung: **06.08.2025**
(21) Anmeldenummer: 18729962.3
(22) Anmeldetag: 08.06.2018
(51) Int. Cl.: B66C 23/86

(54) **KRAN MIT GESCHLOSSENEM HYDRAULIKKREISLAUF**
CRANE WIT A CLOSED HYDRAULIC CIRCUIT
GRUE AVEC UN CIRCUIT HYDRAULIQUE FERMÉ

(30) Priorität: 02.08.2017 DE 102017117505
(43) Veröffentlichungstag der Anmeldung: 10.06.2020
(73) Patentinhaber: Manitowoc Crane Group France SAS, 69574 Dardilly Cedex (FR)
(72) Erfinder: JÄNICKE, Thomas, 26215 Wiefelstede (DE); BOHMANN, Verena, 26203 Wardenburg (DE); SUNTAY, Alexander, 26446 Horsten / Friedeburg (DE)
(74) Vertreter: SSM Sandmair
(86) Internationale Anmeldenummer: PCT/EP2018/065110
(87) Internationale Veröffentlichungsnummer: WO 2019/025058

(56) Entgegenhaltungen:
- WO-A1-91/05966
- CN-U- 203 699 748
- DE-U1- 202007 011 783
- JP-A- H05 248 537

## Beschreibung

Die vorliegende Erfindung betrifft einen Kran, insbesondere einen Mobilkran mit einem geschlossenen Hydraulikkreislauf, in welchem eine Hydraulikpumpe mit zumindest einem Hydraulikmotor über einen Zulauf und einen Ablauf hydraulisch in Verbindung steht und Bypässe zwischen Zulauf und Ablauf den Hydraulikmotor umgehen. Die vorliegende Erfindung betrifft ferner eine entsprechende Steuerungseinrichtung und ein entsprechendes Kransteuerungsprogramm zum Ansteuern des geschlossenen Hydraulikkreislaufs.

Bei Mobilkranen wird grundsätzlich zwischen zwei Arten von hydraulischen Kreisläufen unterschieden, mittels welchen die von einer Antriebspumpe erzeugte Leistung an die anzutreibenden Kranfunktionen, wie etwa Hydraulikzylinder, Winden oder das Drehwerk des Oberwagens weitergeleitet wird.

Bei kleineren Kranen wird das Drehwerk oftmals durch einen offenen Hydraulikkreislauf angetrieben. Dabei ist eine getrennte Steuerung von Ölzulauf und -ablauf möglich. Dies ermöglicht eine Vielzahl von Steuerungsmöglichkeiten, die unterschiedliche Funktionen in einem Drehwerk erlauben. Es kann beispielsweise mit einer Konstantpumpe gearbeitet werden, deren Förderstrom ausschließlich durch ein Ventil geregelt wird. Im Ergebnis können so unterschiedliche Anfahr- und Abbremsszenarien realisiert werden. Eine wichtige Funktion ist der sogenannte "Freilauf", mit dem es möglich ist, den Kranoberwagen aus dem Stillstand durch äußere Kräfte ohne aktiven Einsatz des Drehwerks zu drehen. So kann etwa mittels des Hubwerks der Kranoberwagen über eine zu hebende Last gezogen werden. Hier wird der Drehwerksantrieb quasi kraftfrei geschaltet, was auch die Möglichkeit bietet, aus einer Drehbewegung heraus einen kraftarmen Auslauf des Drehwerks zu realisieren. So kann der erfahrene Kranfahrer das Drehwerk auf die gewünschte Geschwindigkeit bringen, um dann durch Wegnahme des etwa über einen Joystick eingespeisten Ansteuersignals ein Auslaufen hin auf den gewünschten Arbeitspunkt des Krans zu erzielen. Eine genaue Positionierung kann dann durch Betätigung eines Bremspedals, oder gar ein erneutes Beschleunigen erfolgen, falls abzusehen ist, dass der Kran vor dem gewünschten Arbeitspunkt zum Stillstand kommen wird. Der Freilauf ist auch hilfreich, wenn der Kran zusammen mit einem weiteren Kran einen Tandemhub durchführt. Dabei wird eine Last von zwei oder mehreren Kranen gehoben. Diese müssen folglich bei Arbeitsbewegungen synchron arbeiten. Beim Drehwerk bietet hier der Freilauf die Möglichkeit, dass ein Kran aktiv die Führung der Drehbewegung übernimmt und der oder die anderen Krane passiv im Freilauf folgen.

Ein geschlossener Hydraulikkreislauf wird hauptsächlich in größeren Kranen zum Antrieb des Drehwerks eingesetzt. Hier wird die Drehbewegung in der Regel durch eine verstellbare Pumpe gesteuert, die je nach Förderstrom einen oder mehrere Hydraulikmotoren in der Geschwindigkeit steuert. Bei diesem System ist eine Freilaufschaltung am einfachsten umzusetzen, indem ein digital schaltbares Bypass-Ventil einen direkten Kurzschluss zwischen Zu- und Ablaufseite des oder der Hydraulikmotoren erzeugt. Dadurch kann der Kran frei drehen, ein ruckfreies Wiederanfahren während der Bewegung ist aber ebensowenig wie ein feinfühliges Bremsen möglich.

Zur Ansteuerung des Oberwagen-Drehantriebs hält der Stand der Technik mit den Druckschriften DE 27 01 297 C2, DE 33 46 800 A1, DE 42 31 637 C2, DE 44 05 472 A1, DE 199 20 867 A1, EP 1 175 318 B1 und US 5,448,148 A Lösungen mit einem geschlossenen Hydraulikkreislauf, und mit den Druckschriften DE 10 2006 040 459 B4 und EP 2 791 427 B2 Lösungen mit einem offenen Hydraulikkreislauf bereit. Die CN 203699748 schlägt einen Kran mit Hydraulikkreislauf gemäß dem Oberbegriff des Patentanspruchs 1 vor. Die WO 91/05966 zeigt eine Hydraulikschaltung zur Begrenzung des Drehmoments eines im geschlossenen Kreislauf mit einer Hydropumpe verbundenen Hydromotor, der im Bremsbetrieb als Hydropumpe arbeitet. Die JPH05248537 zeigt einen geschlossenen Hydraulikkreislauf mit einem Hydromotor und einer damit verbundenen Hydropumpe.

Aufgabe der vorliegenden Erfindung ist es, einen geschlossenen Kran-Hydraulikkreislauf zu schaffen, der ein feinfühliges Bremsen und Wiederanfahren von Hydraulikmotoren ermöglicht. Diese Aufgabe wird durch den Gegenstand der nebengeordneten Patentansprüche 1, 5 und 6 realisiert. Die Unteransprüche definieren dabei bevorzugte Ausführungsformen der vorliegenden Erfindung.

Erfindungsgemäß wird ein Kran, insbesondere ein Mobilkran mit einem geschlossenen Hydraulikkreislauf bereitgestellt in welchem eine Hydraulikpumpe mit zumindest einem Hydraulikmotor über einen Zulauf und einen Ablauf hydraulisch in Verbindung steht, und der Zulauf mit dem Ablauf über zwei parallel geschaltete und den zumindest einen Hydraulikmotor umgehende Bypässe hydraulisch in Verbindung steht, und die Bypässe zur variablen Steuerung des Fluidstroms für die entgegengerichteten Drehrichtungen des zumindest einen Hydraulikmotors jeweils ein Proportionalventil und ein Rückschlagventil umfassen, wobei das jeweilige Proportionalventil im Freilauf des zumindest einen Hydraulikmotors geöffnet ist, und zum Abbremsen des zumindest einen Hydraulikmotors proportional geschlossen werden kann.

Mit anderen Worten weisen die den Zulauf mit dem Ablauf kurzschließende Bypässe je ein proportional schaltendes Ventil auf, welches in Abhängigkeit eines Steuersignals den jeweiligen Bypass stufenlos öffnen bzw. schließen, so dass in der Folge der durch die Bypässe hindurchtretende Fluidstrom ebenfalls stufenlos variiert werden kann. Auf diese Weise sind sehr feinfühlige Bewegungen, Beschleunigungen und Verzögerungen der über den betreffenden Hydraulikkreislauf angetriebenen Kranfunktionen möglich. Wünschenswert ist dies insbesondere beim Drehwerk des Krans, über welches der auf dem Kranunterwagen bzw. dem Fahrgestell drehbar gelagerte Kranoberwagen mit dem Ausleger rotatorisch um eine vertikale Achse verschwenkt wird.

Gemäß der vorliegenden Erfindung weisen die Bypässe je ein Rückschlagventil auf, welches dazu ausgestaltet ist, den Bypass für den Fluidstrom in zumindest einer Flussrichtung automatisch zu sperren. Ein solches zusätzlich zum Proportionalventil vorgesehenes Rückschlagventil kann beispielsweise so geschaltet sein, dass es den Bypass für den Fluidstrom sperrt, sobald dieser den Bypass in einer ungewollten Gegenrichtung durchströmen würde.

Der erfindungsgemäße Hydraulikkreislauf weist zwei parallel geschaltete Bypässe auf, welche den Zulauf mit dem Ablauf hydraulisch verbinden. Dabei ist je ein Bypass zur variablen Steuerung des Fluidstroms für eine der beiden Drehrichtungen des zumindest einen Hydraulikmotors vorgesehen. Jeder Bypass weist dabei zumindest ein Proportionalventil und zumindest ein Rückschlagventil auf, mittels welcher die für die beiden Drehrichtungen vorgesehenen Fluidströme stufenlos variiert bzw. gesperrt werden können.

Anders ausgedrückt ist ein Bypass für genau eine Drehrichtung des oder der Hydraulikmotoren zuständig, wobei ein Durchströmen der Bypässe in der jeweiligen Gegenrichtung vom Rückschlagventil unterbunden werden kann.

Bevorzugterweise sind die Proportionalventile elektrisch betätigte Proportionalventile. Ebenso denkbar wäre allerdings auch ein Regelventil oder ein Servoventil zur variablen Steuerung des durch den betreffenden Bypass hindurchströmenden Fluidstroms.

Gemäß der vorliegenden Erfindung kommen automatisch absperrende Rückschlagventile als den jeweiligen Bypass absperrende Ventile zum Einsatz. Ein Durchströmen des Bypasses von der Hydraulikflüssigkeit in einer ungewollten Gegenrichtung wird somit automatisch unterbunden. Bei den zwei parallel geschalteten Bypässen sind diese Rückschlagventile gegenläufig geschaltet werden, so dass jeder der beiden Bypässe automatisch während genau einer Drehrichtung des Hydraulikmotors durchströmt wird.

Ferner ist es möglich, dass der Förderstrom der Hydraulikpumpe variabel einstellbar ist, insbesondere mittels eines elektrisch proportionalen Reglers (EP-Reglers) regelbar ist. Auf diese Weise kann mittels einer geeigneten Ansteuerung ein Zusammenspiel des oder der Proportionalventile mit der Hydraulikpumpe erzielt werden, was äußerst feinfühlige Bewegungen, Beschleunigungen und Verzögerungen der über den Hydraulikkreislauf angetriebenen Kranfunktionen, insbesondere eines Drehwerks ermöglicht. Insbesondere wird hierdurch auch ein erneutes Beschleunigen aus einem Freilaufzustand des Hydraulikkreislaufs ermöglicht.

Ferner ist es denkbar, dass das Schluckvolumen zumindest eines Hydraulikmotors variabel einstellbar ist, insbesondere regelbar ist, so dass mittels einer geeigneten Ansteuerung ein weiches "Fahrverhalten" der über den Hydraulikkreislauf angetriebenen Kranfunktionen ermöglicht wird.

Gemäß einer weiteren bevorzugten Ausführungsform der vorliegenden Erfindung weist der Kran ferner eine mit der Hydraulikpumpe und den Proportionalventilen über zumindest eine Schnittstelle in Kontakt stehende Steuerungseinrichtung auf, welche dazu ausgestaltet ist, die Hydraulikpumpe und die Proportionalventile während des Kranbetriebs koordinierend anzusteuern. Mit anderen Worten steuert die Steuerungseinrichtung die Hydraulikpumpe, die Proportionalventile und möglicherweise sogar einen Hydraulikmotor auf eine solche Art und Weise an, dass ein "weiches Fahrverhalten" der durch den geschlossenen Hydraulikkreis angetriebenen Kranfunktionen ermöglicht wird.

Ein weiterer Aspekt der vorliegenden Erfindung betrifft eine solche Steuerungseinrichtung zum Ansteuern eines geschlossenen Hydraulikkreislaufs eines Krans, insbesondere Mobilkrans. Obwohl eine solche Steuerungseinrichtung Teil des erfindungsgemäßen und oben beschriebenen Krans sein kann, kann sie auch als eigenständige Erfindung gesehen werden. Dabei ist die Steuerungseinrichtung mit der variabel einstellbaren Hydraulikpumpe und den stufenlos verstellbaren Proportionalventilen über jeweilige Schnittstellen verbunden und dazu ausgestaltet, die Hydraulikpumpe und die Proportionalventile während des Kranbetriebs koordinierend anzusteuern, so dass das jeweilige Proportionalventil im Freilauf des zumindest einen Hydraulikmotors geöffnet ist, und zum Abbremsen des zumindest einen Hydraulikmotors proportional geschlossen wird, um so feinfühlige Bewegungen, Beschleunigungen und Verzögerungen von Kranfunktionen, insbesondere des Krandrehwerks zu ermöglichen.

Ein weiterer Aspekt der vorliegenden Erfindung betrifft ein entsprechendes Kransteuerungsprogramm zum Ansteuern eines geschlossenen Hydraulikkreislaufs eines Krans, insbesondere eines Mobilkrans, in einer der oben beschriebenen Ausführungsformen. Ein solches Kransteuerungsprogramm kann beispielsweise eine softwarebasierte Regelung bzw. Steuerung sein, die auf der voranstehend beschriebenen Steuerungseinrichtung läuft und eine koordinierte Ansteuerung der Hydraulikpumpe und den Proportionalventilen ermöglicht.

Sofern zumindest einer der Hydraulikmotoren in seinem Schluckvolumen variabel einstellbar bzw. regelbar ist, ist die Steuerungseinrichtung bzw. das Kransteuerungsprogramm darüber hinaus auch dazu ausgestaltet, diesen zumindest einen Hydraulikmotor im Zusammenspiel mit der Hydraulikpumpe und den Proportionalventilen koordinierend anzusteuern bzw. zu regeln.

Im Folgenden wird eine bevorzugte Ausführungsform der vorliegenden Erfindung unter Bezugnahme auf die beiliegende Figur näher beschrieben. Die Erfindung kann alle hierin beschriebenen Merkmale einzeln sowie in jedweder sinnvollen Kombination umfassen.

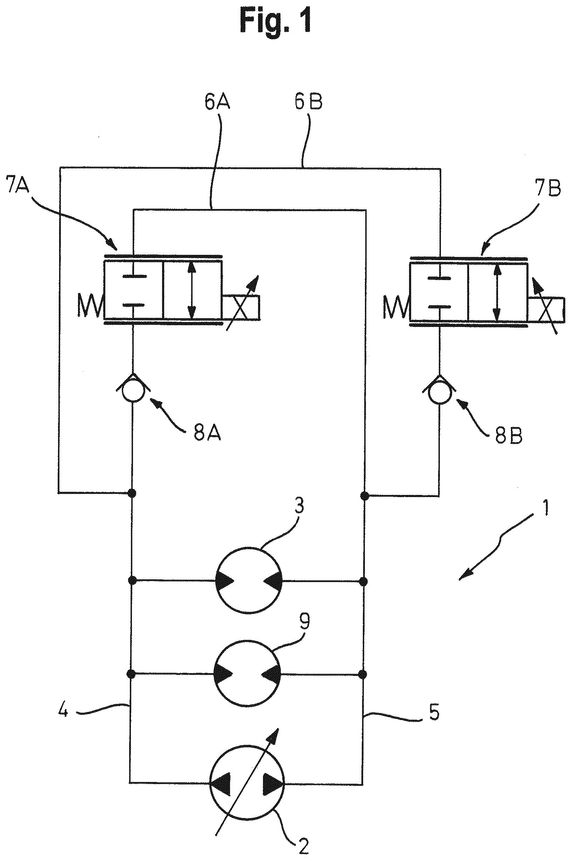

Die Figur 1 zeigt ein hydraulisches Schaltbild eines geschlossenen Kran-Hydraulikkreislaufs 1, in welchem sich zwei Hydraulikmotoren 3, 9 sowohl über ihren gemeinsamen Zulauf 4 als auch über ihren gemeinsamen Ablauf 5 an der regelbaren Hydraulikpumpe 2 abstützen können. An dieser Stelle sei anzumerken, dass der Zulauf 4 bei umgekehrter Drehrichtung der Motoren 3, 9 die Funktion des Ablaufs übernimmt, während der Ablauf 5 die Funktion des Zulaufs 4 übernimmt.

Neben den parallel geschalteten Hydraulikmotoren 3, 9 weist der Kreislauf 1 zwei parallel geschaltete, gegenläufige und beide Motoren 3, 9 umgehende Bypässe 6a, 6b auf. Während der Bypass 6a aufgrund des Rückschlagventils 8a vom Hydraulikfluid ausschließlich gegen den Uhrzeigersinn durchströmt werden kann, kann der Bypass 6b aufgrund des Rückschlagventils 8b ausschließlich im Uhrzeigersinn durchströmt werden. Somit ist jeder der Bypässe 6a, 6b für genau eine Drehrichtung des (nicht gezeigten) Kran-Drehwerks zuständig und wird vom Hydraulikfluid durchströmt, sobald das ihm zugeordnete Proportionalventil 7a, 7b geöffnet wird. Wie in der Figur 1 zu sehen ist, sind die Proportionalventile 7a, 7b mittels einer Feder in ihrer geschlossenen Grundstellung gehalten und können mittels eines nicht näher bezeichneten Betätigungsglieds stufenlos geöffnet werden. Die Ventile können aber auch invers aufgebaut sein, d.h. stromlos geöffnet und dann proportional geschlossen werden, Je nach Öffnungsgrad des jeweiligen Proportionalventils 7a, 7b wird der betreffende Bypass 6a, 6b von einem Teil des Hydraulikfluids durchströmt, welcher folglich nicht zum Antrieb der Motoren 3, 9 zur Verfügung steht.

Im Folgenden werden verschiedene Betriebszustände des in der Figur 1 gezeigten Hydraulikkreislaufs näher beschrieben.

Bei geöffnetem Hydraulikkreislauf 1 wird bei ausgelenktem Joystick das der Drehrichtung zugeordnete Proportionalventil 7a (bzw. 7b) geöffnet, wobei die als Axial-Kolben-Pumpe Hydraulikpumpe 2 durch Ausschwenken den Volumenstrom des Hydraulikfluids erhöht und das Drehwerk wie bei bekannten geschlossenen Kreisen anfährt. Das Proportionalventil 7a (bzw. 7b) wird nicht durchströmt, da der höhere Druck im Zulauf 4 schließend auf das Rückschlagventil 8a wirkt.

Im Freilauf ist das Proportionalventil 7a weiterhin geöffnet, woraufhin die Hydraulikpumpe 2 einschwenkt und den gelieferten Volumenstrom des Hydraulikfluids somit verringert. Die Lastseite der Hydraulikmotoren 3, 9 wechselt und es entsteht ein freier Umlauf ähnlich zum Freilauf in bisherigen geschlossenen Kreisen. Beim Gegensteuern wird das Proportionalventil 7a (bzw. 7b) mit einer Rampenfunktion geschlossen, was den Druck im Ablauf 5 erhöht. Diese Rampenfunktion kann gesteuert oder geregelt sein. Nach Erreichen der Ruheposition wird das Proportionalventil 7b (bzw. 7a) des entgegengerichteten Bypasses 6b (bzw. 6a) geöffnet und die Hydraulikpumpe 2 treibt in die andere Drehrichtung an. Der Kran fährt in der Gegenrichtung an.

Das (nicht gezeigte) Bremspedal ist mit den beiden Ventilen 7a, 7b gekoppelt, wobei über eine Drehrichtungserkennung festgelegt wird, welches der Ventile 7a, 7b zu betätigen ist. Das entsprechende Proportionalventil 7a, 7b wird proportional geschlossen und die Pumpe wird eingeschwenkt, was den gelieferten Volumenstrom des Hydraulikfluids verringert. Der Bremsdruck steigt und das Drehwerk wird langsamer. Um wieder anzufahren, wird sowohl das Proportionalventil 7a, 7b aufgesteuert, als auch die Hydraulikpumpe 2 ausgeschwenkt (Volumenstrom steigt). Sobald der antreibende Lastdruck höher ist als der Druck im jeweiligen Ablauf 5, schließt das Rückschlagventil 8a, 8b.

## Patentansprüche

1. Kran mit einem geschlossenen Hydraulikkreislauf (1), in welchem eine Hydraulikpumpe (2) mit zumindest einem Hydraulikmotor (3, 9) über einen Zulauf (4) und einen Ablauf (5) hydraulisch in Verbindung steht, und der Zulauf (4) mit dem Ablauf (5) über zwei parallel geschaltete und den zumindest einen Hydraulikmotor (3, 9) umgehende Bypässe (6A, 6B) hydraulisch in Verbindung steht, **dadurch gekennzeichnet, dass**
die Bypässe (6A, 6B) zur variablen Steuerung des Fluidstroms für die entgegengerichteten Drehrichtungen des zumindest einen Hydraulikmotors (3, 9) jeweils ein Proportionalventil (7A, 7B) und ein Rückschlagventil (8A, 8B) umfassen, wobei das jeweilige Proportionalventil (7A, 7B) im Freilauf des zumindest einen Hydraulikmotors (3, 9) geöffnet ist, und zum Abbremsen des zumindest einen Hydraulikmotors (3, 9) proportional geschlossen werden kann.

2. Kran gemäß Anspruch 1, wobei der Förderstrom der Hydraulikpumpe (2) variabel einstellbar ist.

3. Kran gemäß einem der Ansprüche 1 und 2, wobei das Schluckvolumen zumindest eines Hydraulikmotors (3, 9) variabel einstellbar ist.

4. Kran gemäß einem der Ansprüche 1 bis 3, mit ferner einer mit der Hydraulikpumpe (2) und den Proportionalventilen (7A, 7B) über zumindest eine Schnittstelle in Kontakt stehenden Steuerungseinrichtung, welche dazu ausgestaltet ist, die Hydraulikpumpe (2) und die Proportionalventile (7A, 7B) während des Kranbetriebs koordinierend anzusteuern.

5. Steuerungseinrichtung zum Ansteuern eines geschlossenen Hydraulikkreislaufs (1) eines Krans gemäß einem der Ansprüche 1 bis 3, wobei die Steuerungseinrichtung mit der Hydraulikpumpe (2) und den Proportionalventilen (7A, 7B) über zumindest eine Schnittstelle in Kontakt steht und dazu ausgestaltet ist, die Hydraulikpumpe (2) und die Proportionalventile (7A, 7B) während des Kranbetriebs koordinierend anzusteuern, so dass das jeweilige Proportionalventil (7A, 7B) im Freilauf des zumindest einen Hydraulikmotors (3, 9) geöffnet ist, und zum Abbremsen des zumindest einen Hydraulikmotors (3, 9) proportional geschlossen wird.

6. Kransteuerungsprogramm zum Ansteuern eines geschlossenen Hydraulikkreislaufs (1) eines Krans, insbesondere Mobilkrans, gemäß einem der Ansprüche 1 bis 4, wenn es auf einer Steuerungseinrichtung gemäß Anspruch 5 läuft.

## Claims

1. Crane having a closed hydraulic circuit (1), in which a hydraulic pump (2) is hydraulically connected to at least one hydraulic motor (3, 9) via an inlet (4) and an outlet (5), and the inlet (4) is hydraulically connected to the outlet (5) via two bypasses (6A, 6B) connected in parallel that bypass the at least one hydraulic motor (3, 9),
**characterised in that**
the bypasses (6A, 6B) each comprise a proportional valve (7A, 7B) and a check valve (8A, 8B) for variable control of the fluid flow for the opposing rotational directions of the at least one hydraulic motor (3, 9), wherein the respective proportional valve (7A, 7B) is opened in the freewheel of the at least one hydraulic motor (3, 9), and can be closed proportionally for braking the at least one hydraulic motor (3, 9).

2. Crane according to claim 1, wherein the flowrate of the hydraulic pump (2) can be variably adjusted.

3. Crane according to one of claims 1 and 2, wherein the displacement of at least one hydraulic motor (3, 9) can be variably adjusted.

4. Crane according to one of claims 1 to 3, also having a control device that is in contact with the hydraulic pump (2) and the proportional valve (7A, 7B) via at least one interface, said control device being designed for coordinated control of the hydraulic pump (2) and the proportional valve (7A, 7B) while operating the crane.

5. Control device for controlling a closed hydraulic circuit (1) of a crane according to one of claims 1 to 3, wherein the control device is in contact with the hydraulic pump (2) and the proportional valve (7A, 7B) via at least one interface and is designed for coordinated control of the hydraulic pump (2) and the proportional valve (7A, 7B) while operating the crane, so that the respective proportional valve (7A, 7B) is opened in the freewheel of the at least one hydraulic motor (3, 9), and can be closed proportionally for braking the at least one hydraulic motor (3, 9).

6. Crane control program for controlling a closed hydraulic circuit (1) of a crane, in particular mobile crane, according to one of claims 1 to 4, when it runs on a control device according to claim 5.

## Revendications

1. Grue à circuit hydraulique fermé (1), dans laquelle une pompe hydraulique (2) est en liaison par voie hydraulique avec au moins un moteur hydraulique (3, 9) par l'intermédiaire d'une entrée (4) et d'une sortie (5), et l'entrée (4) est en liaison par voie hydraulique avec la sortie (5) par l'intermédiaire de deux dérivations (6A, 6B) montées en parallèle et contournant l'au moins un moteur hydraulique (3, 9) ; **caractérisée en ce que**
pour une régulation variable du débit de fluide pour les sens de rotation opposés de l'au moins un moteur hydraulique (3, 9), les dérivations (6A, 6B) comprennent chacune une vanne proportionnelle (7A, 7B) et un clapet anti-retour (8A, 8B), la vanne proportionnelle (7A, 7B) respective étant ouverte lorsque l'au moins un moteur hydraulique (3, 9) est en roue libre et pouvant être fermée proportionnellement pour freiner l'au moins un moteur hydraulique (3, 9).

2. Grue selon la revendication 1, dans laquelle le débit de la pompe hydraulique (2) est réglable de manière variable.

3. Grue selon l'une des revendications 1 et 2, dans laquelle le volume absorbé d'au moins un moteur hydraulique (3, 9) est réglable de manière variable.

4. Grue selon l'une des revendications 1 à 3, comprenant en outre un dispositif de commande qui est en contact avec la pompe hydraulique (2) et les vannes proportionnelles (7A, 7B) par l'intermédiaire d'au moins une interface et qui est conçu pour commander la pompe hydraulique (2) et les vannes proportionnelles (7A, 7B) de manière coordonnée pendant le fonctionnement de la grue.

5. Dispositif de commande pour la commande d'un circuit hydraulique fermé (1) d'une grue selon l'une des revendications 1 à 3, dans lequel le dispositif de commande est en contact avec la pompe hydraulique (2) et les vannes proportionnelles (7A, 7B) par l'intermédiaire d'au moins une interface et est conçu pour commander la pompe hydraulique (2) et les vannes proportionnelles (7A, 7B) de manière coordonnée pendant le fonctionnement de la grue, de telle façon que la vanne proportionnelle (7A, 7B) respective est ouverte lorsque l'au moins un moteur hydraulique (3, 9) est en roue libre et se ferme proportionnellement pour freiner l'au moins un moteur hydraulique (3, 9).

6. Programme de commande de grue pour commander un circuit hydraulique fermé (1) d'une grue, notamment d'une grue mobile, selon l'une des revendications 1 à 4, lorsqu'il est exécuté sur un dispositif de commande selon la revendication 5.
